# EUROPÄISCHE PATENTSCHRIFT

(11) **EP 3 158 208 B1**
(45) Veröffentlichungstag und Bekanntmachung des Hinweises auf die Patenterteilung: **23.05.2018**
(21) Anmeldenummer: 15730994.9
(22) Anmeldetag: 11.06.2015
(51) Int. Cl.: F16B 5/06, F16B 21/06, F16B 43/00

(54) **BAUTEILVERBINDUNG**
COMPONENT CONNECTION
LIAISON DE COMPOSANT

(30) Priorität: 18.06.2014 DE 102014211650
(43) Veröffentlichungstag der Anmeldung: 26.04.2017
(73) Patentinhaber: Bayerische Motoren Werke Aktiengesellschaft, 80809 München (DE)
(72) Erfinder: KORBER, Franz, 84066 Mallersdorf (DE)
(86) Internationale Anmeldenummer: PCT/EP2015/063083
(87) Internationale Veröffentlichungsnummer: WO 2015/193174

(56) Entgegenhaltungen:
- US-A- 1 999 990
- US-A- 2 275 900

## Beschreibung

Die vorliegende Erfindung betrifft eine Bauteilverbindung gemäß dem Oberbegriff des Patentanspruches 1.

Eine derartige Bauteilverbindung ist aus US 2 275 900 A bekannt. Zum technischen Hintergrund der Erfindung zählen die US 1 999 990 A, DE 10 2011 018 525 A1, US 2 266 049 A, DE 10 2011 053 786 A1, DE 36 00 311 A1, DE 34 41 349 A1 sowie die ältere, nicht vorveröffentlichte DE 10 2013 218 650.9 bekannt.

In der DE 10 2013 218 650.9 wird eine Bauteilverbindung mit einem ersten Bauteil und einem davon abstehenden männlichen Fixierelement vorgeschlagen, auf das ein krallenartiges Clipelement aufgeclipst ist. Das männliche Fixierelement ist durch zwei miteinander verschweißte Kugeln gebildet, von denen "die untere Kugel" auf das erste Bauteil aufgeclipst ist. Mit dem Clipelement kann ein auf das erste Bauteil aufgesetztes, mit einem Loch versehenes zweites Bauteil, durch das sich das männliche Fixierelement hindurch erstreckt an dem ersten Bauteil festgeclipst werden.

Für die Festigkeit einer derartigen Clipverbindung ist es von entscheidender Bedeutung, dass die "Höhe" des männlichen Fixierelements, d. h. der Durchmesser der Kugeln des männlichen Fixierelements und die Dicke des zweiten Bauteils so aufeinander abgestimmt sind, dass radial innere Enden zungenartiger Klemmelemente des Clipelements in einem Bereich unterhalb der Äquatorebene der "oberen Kugel" des männlichen Fixierelements von außen her dem männlichen Fixierelement anliegen.

Aufgabe der Erfindung ist es, eine Bauteilverbindung zu schaffen, bei der ein männliches Fixierelement mit einem vorgegebenen "Kugeldurchmesser" für eine Vielzahl von Anwendungsmöglichkeiten geeignet ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist eine Bauteilverbindung mit einem ersten Bauteil und einem davon abstehenden männlichen Fixierelement. Bei dem ersten Bauteil kann es sich beispielsweise um ein Metallbauteil, insbesondere um ein Blechbauteil oder um ein Kunststoffbauteil, insbesondere um ein faserverstärktes Kunststoffbauteil handeln.

Das männliche Fixierelement weist mindestens eine Kugel auf, die bzw. der an einer Verbindungsstelle des ersten Bauteils mit dem ersten Bauteil verbunden ist und von diesem absteht. Das männliche Fixierelement kann insbesondere durch eine sogenannte "Doppelkugel" gebildet sein, d. h. durch zwei unmittelbar miteinander verbundene Kugeln, von denen die "untere Kugel" mit dem ersten Bauteil verbunden ist.

Auf das männliche Fixierelement ist ein Clipelement aufgeclipst, das z B. als Befestigungskralle ausgebildet sein kann, entsprechend der Art, wie sie in der eingangs erwähnten DE 10 2013 218 650.9 beschrieben ist. Ein derartiges Clipelement liegt in einem Bereich zwischen einer Oberseite des ersten Bauteils und einer Äquatorebene der mindestens einen Kugel schräg von unten außen her an der mindestens einen Kugel an.

Der Kern der Erfindung besteht darin, dass die Verbindungsstelle, an der das männliche Fixierelement mit dem ersten Bauteil verbunden ist, als lokale Erhebung oder als lokale Vertiefung ausgebildet ist. Durch die "Höhe" der lokalen Erhebung bzw. lokalen Vertiefung kann bei der Verwendung eines vorgegebenen "Kugeldurchmessers" eingestellt werden, wie weit das männliche Fixierelement von dem ersten Bauteil (im Bezug auf ein Niveau, welches radial etwas "außerhalb" der lokalen Erhebung oder lokalen Vertiefung liegt) vorsteht.

Sofern das erste Bauteil aus einem duktilen Material besteht, wie z. B. Stahl oder Aluminium, kann die lokale Erhebung als "Ausprägung" bzw. die lokale Vertiefung als "Einprägung" des ersten Bauteils ausgebildet sein. Die lokale Erhebung bzw. die lokale Vertiefung kann also durch lokales Umformen des ersten Bauteils hergestellt werden. Wenn es sich bei dem ersten Bauteil beispielsweise um ein durch Tiefziehen umgeformtes Blechbauteil handelt, kann die lokale Erhebung bzw. die lokale Vertiefung während des Press- bzw. Tiefziehvorgangs im Press- bzw. Tiefziehwerkzeug hergestellt werden. Sofern es sich bei dem ersten Bauteil um ein Kunststoffbauteil handelt, z. B. um ein Spritzgussbauteil, kann die lokale Erhebung bzw. Vertiefung unmittelbar beim Urformen, d. h. im Formwerkzeug hergestellt werden.

Nach einer Weiterbildung der Erfindung ist vorgesehen, dass die mindestens eine Kugel des männlichen Fixierelements unmittelbar an der Verbindungsstelle anliegt bzw. unmittelbar an der Verbindungsstelle mit dem ersten Bauteil verbunden ist. Das männliche Fixierelement kann z. B. stoffschlüssig, insbesondere durch Verschweißen, mit der Verbindungsstelle des ersten Bauteils verbunden sein.

Alternativ dazu kann auch vorgesehen sein, dass mindestens eine Kugel des männlichen Fixierelements in das Material (z.B. in die Erhebung bzw. Vertiefung) des ersten Bauteils und somit in das erste Bauteil eingepresst ist, derart, dass die mindestens eine Kugel des männlichen Fixierelements formschlüssig mit dem ersten Bauteil verbunden ist. Die mindestens eine Kugel muss nicht in seiner Gesamtheit in das erste Bauteil eingepresst sein, sondern kann auch nur zu einem Teil eingepresst sein, d.h. ein nicht eingepresster Teil der zweiten Kugel kann aus nach dem Einpressen aus dem ersten Bauteil herausragen.

Beim Einpressen der mindestens einen Kugel in das erste Bauteil kommt es zu einem Fließen des Materials des ersten Bauteils und/oder des Materials der zweiten Kugel, derart, dass sich zwischen der Kugel und dem ersten Bauteil der o.g. Formschluss ergibt. Mit "Einpressen" ist also gemeint, dass Material des ersten Bauteils und/oder der Kugel fließt und nicht etwa, dass die Kugel in eine Ausnehmung des ersten Bauteils eingeklemmt wird.

Nach einer Weiterbildung der Erfindung ist vorgesehen, dass das Material der Kugel bzw. das Material des gesamten Verbindungselements härter oder zumindest ebenso hart ist, wie das Material des ersten Bauteils.

Versuche haben bestätigt, dass ein erfindungsgemäßes Verbindungselement derart in ein erstes Bauteil einpressbar ist, dass Material des ersten Bauteils so fließt, dass es die Kugel des Verbindungselements zumindest teilweise formschlüssig umgreift, ähnlich wie dies bei einer Gelenkpfanne eines Kugelgelenks der Fall ist.

Vorzugsweise ist eine Kugel des männlichen Fixierelements so in das erste Bauteil eingepresst, dass sich Material des ersten Bauteils bis in einen Bereich oberhalb der Äquatorebene der Kugel des Fixierelements erstreckt und sich enganliegend an die Kugel des Fixierelements anschmiegt. Vorzugsweise schmiegt sich Material des ersten Bauteils über einen gesamten Umfang der Kugel des Fixierelements an eine Kugel des Fixierelements an.

Auf diese Weise kann eine formschlüssige und im Wesentlichen unlösbare Verbindung zwischen der Kugel und dem ersten Bauteil erreicht werden.

Nach einer Weiterbildung der Erfindung ist die Kugel derart in das erste Bauteil eingepresst, dass es das erste Bauteil nicht durchsetzt. Es kann vorgesehen sein, dass das erste Bauteil im Bereich der Kugel auf der dem Bauteil abgewandten Seite aufgewölbt ist.

Versuche haben ergeben, dass durch Einpressen der Kugel des Verbindungselements nicht nur eine hochfeste, sondern auch eine qualitativ hochwertige, rissfreie Verbindung zwischen der Kugel und dem ersten Bauteil erreichen lässt, die hinsichtlich ihrer Fertigungsgüte mit einer qualitativ hochwertig hergestellten und nachbearbeiteten Schweißverbindung vergleichbar ist.

Wie bereits erwähnt, kann das männliche Fixierelement durch zwei oder mehr miteinander verbundene Kugeln gebildet sein (Doppelkugel oder Mehrfachkugel). Die einzelnen Kugel können in einer Linie hintereinander, z.B. perlenkettenartig angeordnet sein. Es kann aber auch vorgesehen sein, dass eine oder mehrere Kugeln von einem bzw. mehreren anderen Kugel absteht bzw. abstehen.

Es kann vorgesehen sein, dass das Clipelement eine größere radiale Weite aufweist als die die Verbindungsstelle bildende lokale Erhebung oder lokale Vertiefung. Das Clipelement steht dann also in Radialrichtung über die lokale Erhebung oder lokale Vertiefung vor.

Mit einem derartigen Clipelement kann ein zweites Bauteil an dem ersten Bauteil festgeclipst werden. Es kann vorgesehen sein, dass das zweite Bauteil ein Loch aufweist, durch welches sich das von dem ersten Bauteil abstehende männliche Fixierelement hindurch erstreckt. Das auf das männliche Fixierelement aufgeclipste Clipelement stützt sich einerseits von unten außen her an dem männlichen Fixierelement bzw. an einer Kugel des männlichen Fixierelements ab und andererseits an einer dem ersten Bauteil abgewandten Oberseite des zweiten Bauteils, wodurch dieses gegen das erste Bauteil gedrückt wird. Vorzugsweise erstreck sich das Clipelement radial soweit nach außen, dass es das in dem zweiten Bauteil vorgesehene Durchgangsloch übergreift.

Es kann vorgesehen sein, dass ein Übergangsbereich zwischen der lokalen Erhebung bzw. der lokalen Vertiefung und einem radial außerhalb der lokalen Erhebung bzw. lokalen Vertiefung befindlichen Bereich des ersten Bauteils konisch gestaltet ist. Eine konische Gestaltung des Übergangsbereichs ist insbesondere bei einer lokalen Erhebung von Vorteil, da durch eine konische Gestaltung des Übergangsbereichs die Gefahr eines Verkantens des zweiten Bauteils beim Aufsetzen auf das erste Bauteil verringert wird. Das in dem zweiten Bauteil vorgesehene Durchgangsloch kann an dem konischen Übergangsbereich von der lokalen Erhebung nach unten gleiten, bis es an der Oberseite des ersten Bauteils anliegt. Ferner kann vorgesehen sein, dass der Übergangsbereich und/oder das männliche Fixierelement einerseits und das in dem zweiten Bauteil vorgesehene Durchgangsloch andererseits eine "Art Passung" bilden. Dadurch ergibt sich zwischen dem zweiten Bauteil und der Erhebung bzw. dem männlichen Fixierelement ein Formschluss, welcher die beiden Bauteile in Querrichtung relativ zueinander fixiert.

Die Erfindung ist insbesondere in Verbindung mit einem "krallenartigen Befestigungselement" (im Folgenden auch "Befestigungskralle" genannt) einsetzbar. Ein derartiges krallenartiges Befestigungselement weist einen Kreisringabschnitt auf, von dessen radialer Innenseite mindestens zwei, vorzugsweise drei oder vier biegeelastische, zungenartige Elemente schräg nach innen oben in Richtung einer Oberseite der Befestigungskralle hin abstehen.

Die zungenartigen Elemente weisen freie Enden auf. Die freien Enden der zungenartigen Elemente beranden bzw. definieren einen mittleren, offenen Bereich der Befestigungskralle. Von einer Unterseite der Befestigungskralle her kann ein Fixierelement, eingeführt und zwischen die freien Enden der zungenartigen Elemente eingeklemmt werden. Bei dem Fixierelement kann es sich um ein Fixierelement handeln, das einen kugelförmigen oder kugelähnlichen Kopf aufweist. Prinzipiell sind aber auch andersartig gestaltete Fixierelemente denkbar, die in den mittleren, offenen Bereich der Befestigungskralle einführbar sind.

Die bereits erwähnten zungenartigen Elemente sind voneinander durch Schlitze getrennt, die sich von einem kreisringabschnittnahen Bereich im Wesentlichen radial nach innen erstrecken. Es kann vorgesehen sein, dass radial äußere Enden der zwischen den zungenartigen Elementen vorgesehenen Schlitze ausgerundet sind.

Ferner kann vorgesehen sein, dass die zungenartigen Elemente sich zu ihren freien Enden hin verjüngen. Die freien Enden der zungenartigen Elemente können z.B. konvex gerundet gestaltet sein. Alternativ dazu können die freien Enden der zungenartigen Elemente auch gerade ausgebildet sein, derart, dass sie sich "tangential" in Bezug auf den mittleren, offenen Bereich der Befestigungskralle erstrecken. Alternativ dazu kann vorgesehen sein, dass die freien Enden der zungenartigen Elemente konkav ausgebildet sind. Eine konkave Gestaltung der freien Enden der zungenartigen Elemente hat den Vorteil, dass sie sich, sofern das zwischen ihnen eingeklemmte Fixierelement rund gestaltet ist, an dessen Außenkontur anschmiegen können.

Nach einer Weiterbildung der Erfindung stehen die zungenartigen Elemente schräg von dem Kreisringabschnitt ab. "Schräg" bedeutet, dass die zungenartigen Elemente jeweils einen bestimmten Winkel mit der durch den Kreisringabschnitt gebildeten Ebene einschließen. Versuche haben gezeigt, dass es von Vorteil ist, wenn dieser Winkel in einem Bereich zwischen 10° und 40° liegt. Besonders günstig sind Winkel, die in einem Bereich zwischen 20° und 30° liegen. Bei einem konkreten Ausführungsbeispiel kann bspw. vorgesehen sein, dass der Winkel, den die zungenartigen Elemente mit dem Kreisringabschnitt einschließen, bei 28° oder mehr liegt.

Nach einer Weiterbildung der Erfindung sind die zungenartigen Elemente gleichmäßig in Umfangsrichtung des Kreisabschnitts verteilt angeordnet. Sie können insbesondere identisch gestaltet sein. Wie bereits erwähnt, sind mindestens zwei zungenartige Elemente vorgesehen. Unter Festigkeitsgesichtspunkten ist es günstig, wenn genau drei oder genau vier zungenartige Elemente vorgesehen sind. Prinzipiell könnten aber auch fünf oder mehr derartige zungenartige Elemente vorgesehen sein.

Die Befestigungskralle kann aus Metall, insbesondere aus einem Metallblech hergestellt sein. Sie kann bspw. aus einem Stahlblech ausgestanzt sein, wobei nach dem Ausstanzen die zungenartigen Elemente wie oben beschrieben aufgebogen werden.

Nach einer Weiterbildung der Erfindung stehen von dem Kreisringabschnitt radial nach außen mehrere in Umfangsrichtung des Kreisringabschnitts verteilt angeordnete "Schirmringabschnitte" ab. Zwei in Umfangsrichtung aufeinander folgende Schirmringabschnitte sind dabei jeweils durch einen sich in radialer Richtung erstreckenden Schirmringschlitz voneinander getrennt. Durch die Schirmringabschnitte wird der Befestigungskralle eine zusätzliche Elastizität verliehen. Die Schirmringabschnitte haben eine ähnliche Funktion wie Blattfedern oder Tellerfedern, d.h. sie drücken im montierten Zustand der Befestigungskralle gegen ein Bauteil.

Radial innere Enden der Schirmringschlitze können ausgerundet sein.

Nach einer Weiterbildung der Erfindung ist vorgesehen, dass die Schirmringschlitze in Umfangsrichtung versetzt in Bezug auf die zwischen den zungenartigen Elementen vorgesehenen Schlitze sind.

Vorzugsweise stehen die Schirmringabschnitte schräg nach unten von dem Kreisringabschnitt ab, wodurch sich eine "hutartige Form" der Befestigungskralle ergibt.

Es kann vorgesehen sein, dass die Anzahl der Schirmringabschnitte gleich oder größer der Anzahl der zungenartigen Elemente ist.

Sofern die Befestigungskralle aus Stahl hergestellt ist, ist es von Vorteil, wenn sie einsatzgehärtet ist. Ferner kann vorgesehen sein, dass die Befestigungskralle mit einem Beschichtungsmaterial, z.B. mit einer Korrosionsschutzbeschichtung und/oder mit einer elektrisch isolierenden Beschichtung überzogen ist.

Alternativ zu Metall kann die Befestigungskralle z.B. auch aus Kunststoff hergestellt sein. Wesentlich ist, dass die Befestigungskralle eine gewisse Mindestelastizität aufweist.

Nach einer Weiterbildung der Erfindung ist vorgesehen, dass die Befestigungskralle ein eigenständiges Verbindungselement und nicht integraler Bestandteil einer anderen Komponente oder eines anderen Bauteils ist. Letzteres ist aber keinesfalls ausgeschlossen. Die Befestigungskralle selbst kann selbstverständlich auch integraler Bestandteil einer anderen Komponente oder eines anderen Bauteils sein oder mit einer anderen Komponente oder mit einem anderen Bauteil verbunden sein.

Ein weiterer wesentlicher Aspekt der Erfindung ist eine Bauteilverbindung mit einer Befestigungskralle, wie sie oben beschrieben worden ist. Eine derartige Bauteilverbindung weist ein (erstes) Bauteil mit einem männlichen Fixierelement auf, das von dem ersten Bauteil absteht. Das männliche Fixierelement kann in einen ersten Abschnitt und in einen zweiten, mit dem ersten Abschnitt verbundenen bzw. sich an den ersten Abschnitt anschließenden zweiten Abschnitt untergliedert werden. Über den ersten Abschnitt ist das männliche Fixierelement unmittelbar mit dem ersten Bauteil verbunden. Das männliche Fixierelement kann über den ersten Abschnitt z.B. einstückig mit dem ersten Bauteil verbunden sein oder an das erste Bauteil angeschweißt oder in anderer Weise mit dem ersten Bauteil verbunden sein. Der sich an den ersten Abschnitt anschließende zweite Abschnitt hat erfindungsgemäß die Form einer Kugel oder eine kugelähnliche Form.

Der erste Abschnitt kann ebenfalls die Form einer Kugel oder eine kugelähnliche Form aufweisen. In diesem Fall ist das männliche Fixierelement durch zwei miteinander verbundene, z.B. miteinander verschweißte, Kugeln gebildet (so genannte "Doppelkugel").

Dies muss aber nicht zwingend der Fall sein. Der erste Abschnitt könnte z.B. auch zapfenartig bzw. zylinderartig o.ä. ausgebildet sein. Der zweite kugelige Abschnitt steht vorzugsweise kopfartig von dem ersten Abschnitt ab.

Auf das männliche Fixierelement, insbesondere auf dessen kugeligen zweiten Abschnitt ist die Befestigungskralle aufgeclipst und zwar derart, dass die freien Enden der zungenartigen Elemente in einem Bereich zwischen einer Oberseite des ersten Bauteils und einer Äquatorebene des kugeligen Abschnitts schräg von unten her an dem kugeligen Abschnitt anliegen. Aufgrund dieser Anlageposition unterhalb der Äquatorebene ergibt sich ein Formschluss bzw. ein Hinterschnitt, was dazu führt, dass die Befestigungskralle im Prinzip nur durch Zerstören der Befestigungskralle von dem männlichen Fixierelement abgezogen werden kann oder mittels eines geeignet gestalteten Spezialwerkzeugs.

Nach einer Weiterbildung der Erfindung ist vorgesehen, dass die Bauteilverbindung ein zweites Bauteil aufweist, welches wiederum ein Durchgangsloch aufweist, durch das sich das männliche Fixierelement hindurch erstreckt.

Es kann vorgesehen sein, dass zumindest der Kreisringabschnitt und/oder die Schirmringabschnitte in einem durchgangslochnahen Bereich des zweiten Bauteils (federartig) an einer dem ersten Bauteil abgewandten zweiten abgewandten Seite des zweiten Bauteils an dem zweiten Bauteil anliegt bzw. anliegen. Der Kreisringabschnitt und/oder die Schirmringabschnitte widersetzen sich somit einem Abziehen des zweiten Bauteils von dem ersten Bauteil. Aufgrund der Form der Befestigungskralle wird eine auf das zweite Bauteil wirkende Abziehkraft in Kräfte umgesetzt, die in Längsrichtung der zungenartigen Elemente wirken und die an den freien Enden der zungenartigen Elemente von dem zweiten, kugeligen Abschnitt des männlichen Fixierelements abgestützt werden. Dadurch ergibt sich eine der Abziehkraft entgegenwirkende Selbsthemmung.

Die erfindungsgemäße Bauteilverbindung kann in einer Vielzahl von Technologiegebieten eingesetzt werden. Vielfältige Anwendungen sind z.B. im Fahrzeugbau, insbesondere im Fahrzeugkarosseriebau denkbar. Dementsprechend kann es sich bei dem ersten und/oder dem zweiten Bauteil z.B. um ein erstes bzw. zweites Fahrzeugkarosserieteil handeln.

Im Folgenden wird die Erfindung im Zusammenhang mit der Zeichnung näher erläutert. Es zeigen:
- Fig.1: das Grundprinzip eines krallenartiegen Befestigungselements gemäß der Erfindung in schematischer Darstellung;
- Fig. 2: die Bedeutung des Schrägstellungswinkels der zungenartigen Elemente;
- Fig. 3: ein zweites Bauteil mit einem Durchgangsloch, durch welches eine Doppelkugel ragt;
- Fig. 4: das Ausführungsbeispiel der Fig. 3 mit aufgeclipster Befestigungskralle;
- Fig. 5: eine vergrößerte Darstellung einer Bauteilverbindung gemäß der Erfindung;
- Fig. 6: ein alternatives Ausführungsbeispiel einer Befestigungskralle mit zwei Federelementen;
- Fig. 7: eine Befestigungskralle mit vier Federelementen;
- Fig.8: eine alternativgestaltete Befestigungskralle mit vier Federelementen;
- Fig.9: eine weitere Alternative einer Befestigungskralle mit vier Federelementen;
- Fig. 10: eine Befestigungskralle mit zusätzlichen Schirmringabschnitten;
- Fig. 11: eine Variante des Ausführungsbeispiels der Fig. 10;
- Fig. 12: eine weitere Variante einer Befestigungskralle;
- Fig. 13: eine Ausführungsbeispiel einer Bauteilverbindung gemäß der Erfindung;
- Fig. 14: ein weiteres Ausführungsbeispiel gemäß der Erfindung mit einem dickeren zweiten Bauteil; und
- Fig. 15: ein Ausführungsbeispiel einer Bauteilverbindung, bei der die Verbindungsstelle als lokale Vertiefung ausgebildet ist.

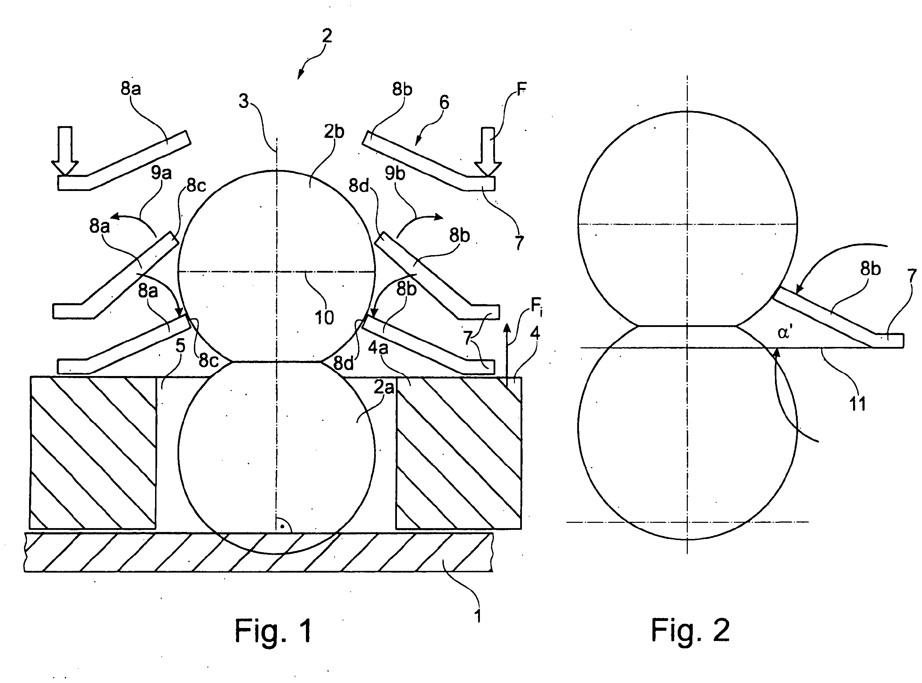

Es sein vorausgeschickt, dass sämtliche in den Figuren 1 bis 15 gezeigten technischen Merkmale Gegenstand der vorliegenden Erfindung sind, auch wenn in Figur 1 die erfindungsgemäße Erhebung bzw. Vertiefung nicht explizit dargestellt ist.

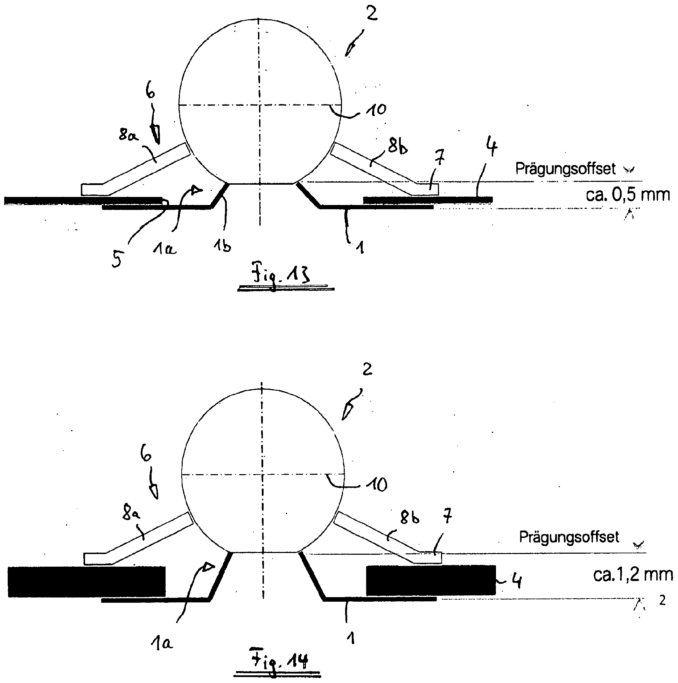

Fig. 1 zeigt eine schematische Darstellung einer Bauteilverbindung gemäß der Erfindung, wobei die erfindungsgemäße Erhebung bzw. Vertiefung nicht explizit dargestellt ist (vgl. hierzu Fig. 13 bis 15). Auf ein erstes Bauteil 1, bei dem es sich bspw. um ein (Stahl-)blech (z.B. ein Karosserieteil einer Fahrzeugkarosserie) handeln kann, ist ein "männliches Fixierelement" 2 aufgeschweißt. Das männliche Fixierelement 2 ist hier durch zwei miteinander verschweißte Kugeln 2a, 2b gebildet. Die Kugel 2a ist auf die Oberseite des Bauteils 1 aufgeschweißt. Eine durch die beiden Mittelpunkte der Kugeln 2a, 2b verlaufende Gerade 3 steht senkrecht auf dem Bauteil 1 im Aufstandspunkt der Kugel 2a.

Alternativ dazu kann auch vorgesehen sein, dass die Kugel 2a zumindest soweit in das Material des ersten Bauteils 1 eingepresst ist, dass sich eine formschlüssige Verbindung zwischen der Kugel 2a und dem ersten Bauteil 1 ergibt. Das Einpressen kann in einem Press- bzw. Tiefziehwerkzeug erfolgen, in dem bzw. mittels dem das erste Bauteil umgeformt wird. Das Einpressen einer Kugel bzw. einer Kugel einer "Doppelkugel" ist eine alternative Befestigungsmöglichkeit, die nicht nur bei dem in Figur 1 gezeigt Ausführungsbeispiel, sondern auch bei allen Ausführungsbeispielen besteht.

Auf das erste Bauteil 1 ist ein zweites Bauteil 4 aufgesetzt. Das zweite Bauteil 4 weist ein Durchgangsloch 5 auf, dessen Durchmesser größer als der Durchmesser der beiden Kugeln 2a, 2b des männlichen Fixierelements 2 ist. Das männliche Fixierelement 2 ragt durch das Durchgangsloch 5 hindurch, wobei sich die Kugel 2b vollständig auf der dem Bauteil 1 abgewandten Oberseite 4a des zweiten Bauteils 4 befindet.

Die beiden Bauteile 1, 4 werden mittels des männlichen Fixierelements, das hier als "Doppelkugel" ausgebildet ist, und einer Befestigungskralle 6 zusammengeklemmt. Die in Fig. 1 nur schematisch dargestellte Befestigungskralle weist einen im Wesentlichen ebenen Kreisringabschnitt 7 sowie zwei biegeelastische, zungenartige Elemente 8a, 8b auf.

In Fig. 1 ist die Befestigungskralle 6 in drei verschiedenen Stellungen dargestellt, nämlich - beginnend von oben - in einer Ausgangsstellung, in einer Mittelstellung und in einer gefügten Stellung.

Ausgehend von der Ausgangsstellung wird die Befestigungskralle 6 mit einer Kraft F auf die Kugel 2b gedrückt, was dazu führt, dass die zungenartigen Elemente 8a, 8b elastisch nach oben biegen, was durch Pfeile 9a, 9b dargestellt ist. Freie Enden 8c, 8d der zungenartigen Elemente 8a, 8b gleiten am Außenumfang der Kugel 2b über deren Äquatorebene 10 nach unten.

Wenn die Befestigungskralle 6 mit ihrem Kreisringabschnitt 7 auf der Oberseite 4a des zweiten Bauteils 4 aufliegt, stehen die zungenartigen Elemente 8a, 8b schräg nach oben von dem Kreisringabschnitt 7 ab, wobei die freien Enden 8c, 8d der zungenartigen Elemente 8a, 8b schräg von unten her in einem Bereich zwischen der Oberseite 4a des zweiten Bauteils 4 und der Äquatorebene 10 der Kugel 2b am Außenumfang der Kugel 2b anliegen. Dadurch ergibt sich ein Formschluss.

Ein Abziehen des zweiten Bauteils 4 von dem ersten Bauteil ein wird, was durch die Kraft F₁ angedeutet ist, durch die Befestigungskralle 6 blockiert. Die Abziehkraft F₁ überträgt sich über den Kreisringabschnitt 7 auf die Befestigungskralle und wird über die zungenartigen Elemente 8a, 8b in Längsrichtung der zungenartigen Elemente 8a, 8b bzw. über deren freie Enden 8c, 8d in die Kugel 2b des männlichen Fixierelements 2 eingeleitet und von dieser abgestützt. Da die zungenartigen Elemente 8a, 8b selbsttätig nicht nach oben biegen, wird ein Abziehen des zweiten Bauteils 4 von dem ersten Bauteil 1 verhindert.

Versuche haben gezeigt, dass es günstig ist, wenn, wie in Fig. 2 dargestellt, der Winkel α zwischen der durch den Kreisringabschnitt 7 gebildeten Ebene 11 und den zungenartigen Elementen (in Fig. 2 ist lediglich das zungenartige Element 8b dargestellt), in einem Bereich zwischen 10° und 40°, vorzugsweise in einem Bereich zwischen 20° und 30° liegt. Bei dem in Fig. 2 gezeigten Ausführungsbeispiel beträgt der Winkel α ca. 25°.

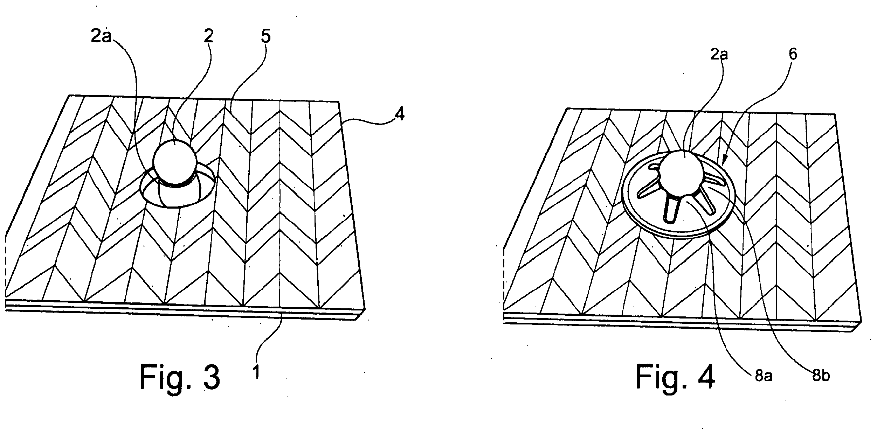

Fig. 3 zeigt einen Teil der erfindungsgemäßen Anordnung, wobei ein Bauteil 4, welches ein Loch 5 aufweist, so auf ein Bauteil 1 aufgesetzt ist, dass eine von dem Bauteil 1 abstehende "Doppelkugel" (entspricht dem männlichen Fixierelement 2) mit ihrer oberen Kugel 2a durch das Loch 5 hindurch ragt.

Fig. 4 zeigt die "fertige" Bauteilverbindung; wobei auf die Kugel 2a eine Befestigungskralle 6 aufgeclipst ist, die mehrere in Umfangsrichtung verteilt angeordnete zungenartige Elemente 8a, 8b aufweist.

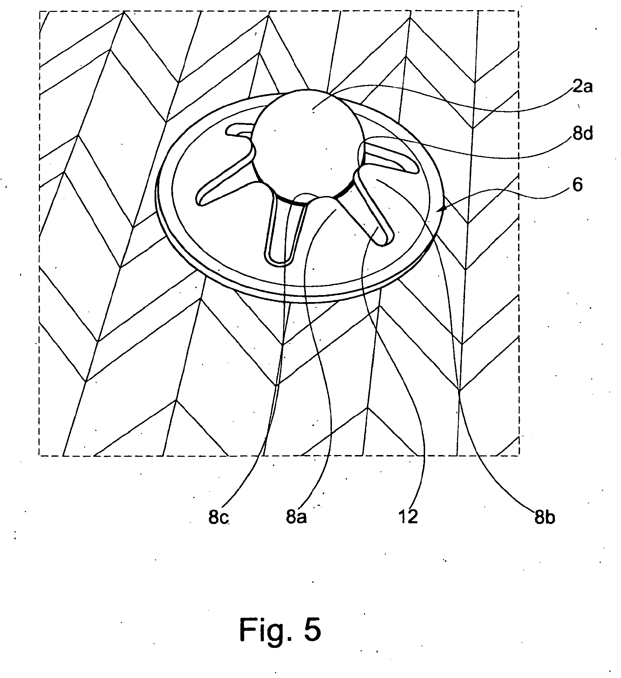

Fig. 5 zeigt eine vergrößerte Darstellung einer solchen Bauteilverbindung. Deutlich zu erkennen ist, dass die zungenartigen Elemente 8a, 8b sich zu ihren freien Enden 8c, 8d hin verjüngen. Die einzelnen zungenartigen Elemente 8a, 8b sind jeweils durch sich radial nach innen erstreckende Schlitze 12 voneinander getrennt. Wie aus Fig. 5 ersichtlich ist, sind radial äußere Enden der zwischen den zungenartigen Elementen 8a, 8b vorgesehenen Schlitze 12 ausgerundet.

Bei dem in Fig. 5 gezeigten Ausführungsbeispiel sind die freien Enden 8c, 8d der zungenartigen Elemente 8a, 8b im Wesentlichen gerade ausgebildet, d.h. sie liegen tangential an der Kugel 2a an. Alternativ dazu könnten die freien Enden auch konvex gerundet oder konkav gerundet ausgebildet sein. Konkav gerundete freie Enden haben den Vorteil, dass sie sich eng anliegend an den Außenumfang der Kugel 2a anschmiegen würden.

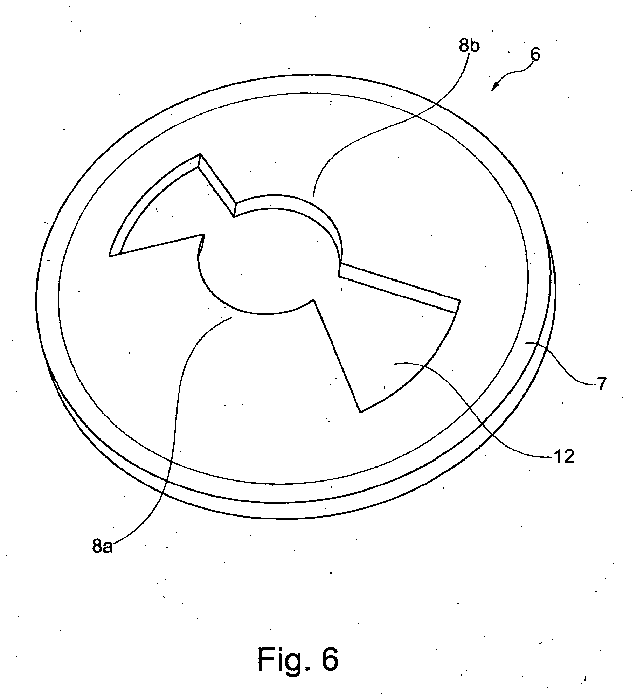

Fig. 6 zeigt ein Ausführungsbeispiel einer Befestigungskralle, die lediglich zwei zungenartige Elemente 8a, 8b aufweist, deren freie Enden konkav gerundet sind. Die Schlitze 12, welche die beiden zungenartigen Elemente 8a, 8b voneinander trennen, sind hier trapezartig gestaltet.

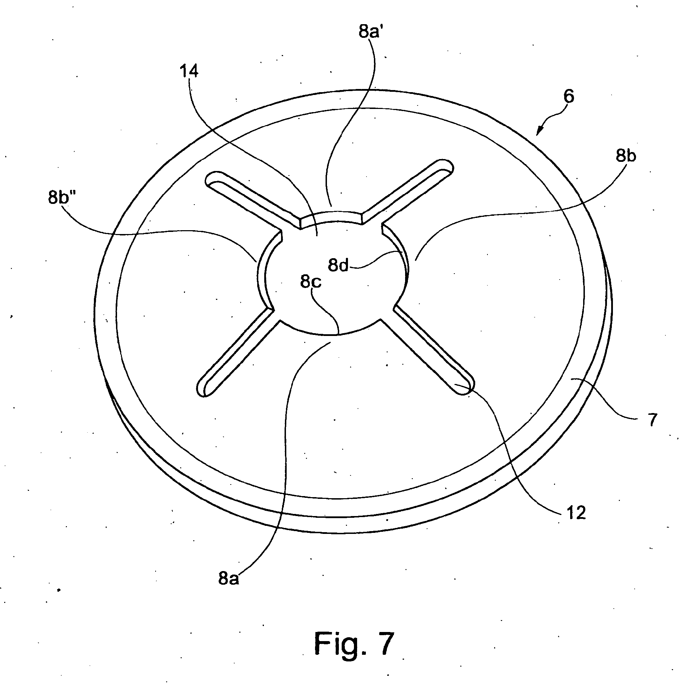

Fig. 7 zeigt ein Ausführungsbeispiel einer Befestigungskralle 6, die vier zungenartige Elemente 8a, 8b, 8a', 8b' aufweist. Zwei in Umfangsrichtung aufeinander folgende zungenartige Elemente 8a, 8b sind jeweils durch einen schmalen, sich in radialer Richtung erstreckenden, in seinem Grund ausgerundeten Schlitz 12 voneinander getrennt. Auch bei diesem Ausführungsbeispiel sind die freien Enden 8c, 8d der zungenartigen Elemente 8a, 8b konkav ausgerundet.

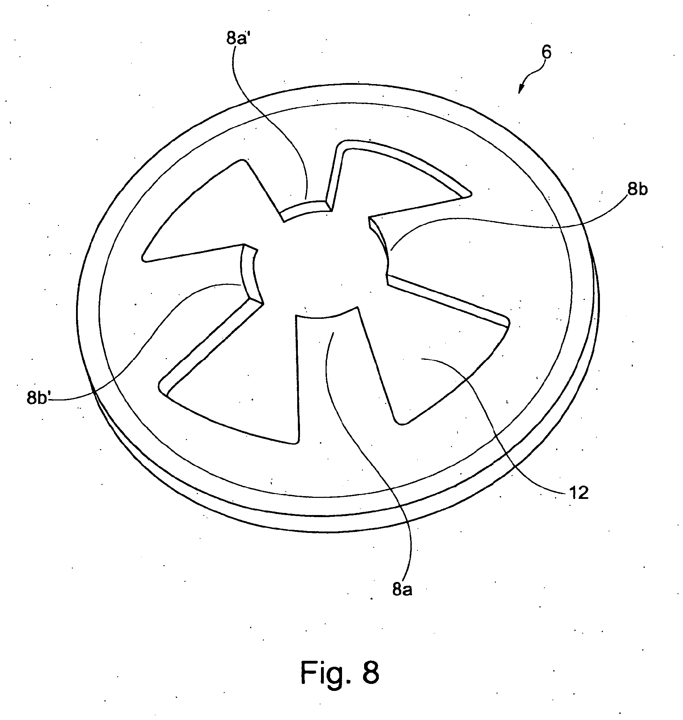

Fig. 8 zeigt ein Ausführungsbeispiel einer Befestigungskralle 6, bei dem ebenfalls vier zungenartige Elemente 8a, 8b, 8a', 8b' vorgesehen sind. Im Unterschied zum Ausführungsbeispiel der Fig. 7 sind hier die Schlitze 12 ähnlich wie beim Ausführungsbeispiel der Fig. 6 trapezartig gestaltet.

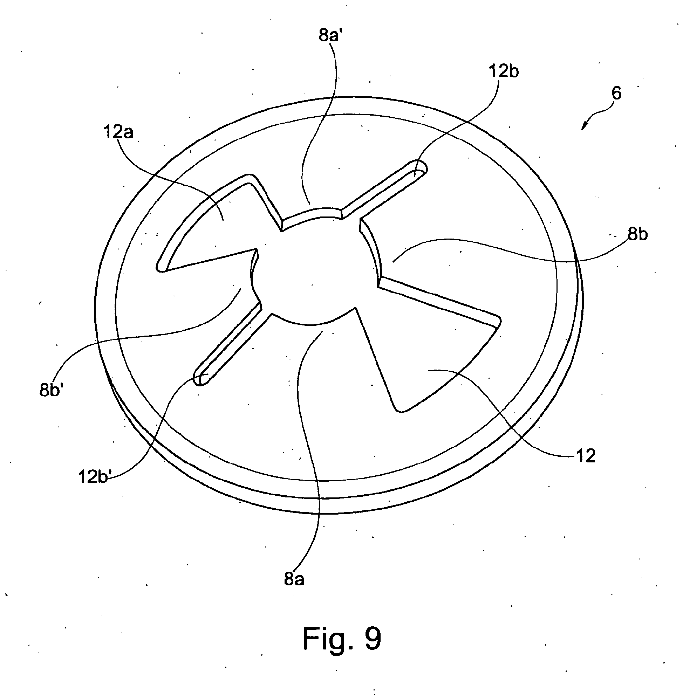

Fig. 9 zeigt ein Ausführungsbeispiel einer Befestigungskralle 6, bei dem vier zungenartige Elemente 8a, 8b, 8a', 8b' vorgesehen sind. Der die beiden zungenartigen Elemente 8a, 8b trennende Schlitz 12 sowie der gegenüberliegende Schlitz 12a ist trapezartig gestaltet, wohingegen die beiden anderen Schlitze 12b, 12b' als relativ schmale, in Radialrichtung verlaufende gerade Schlitze ausgebildet sind.

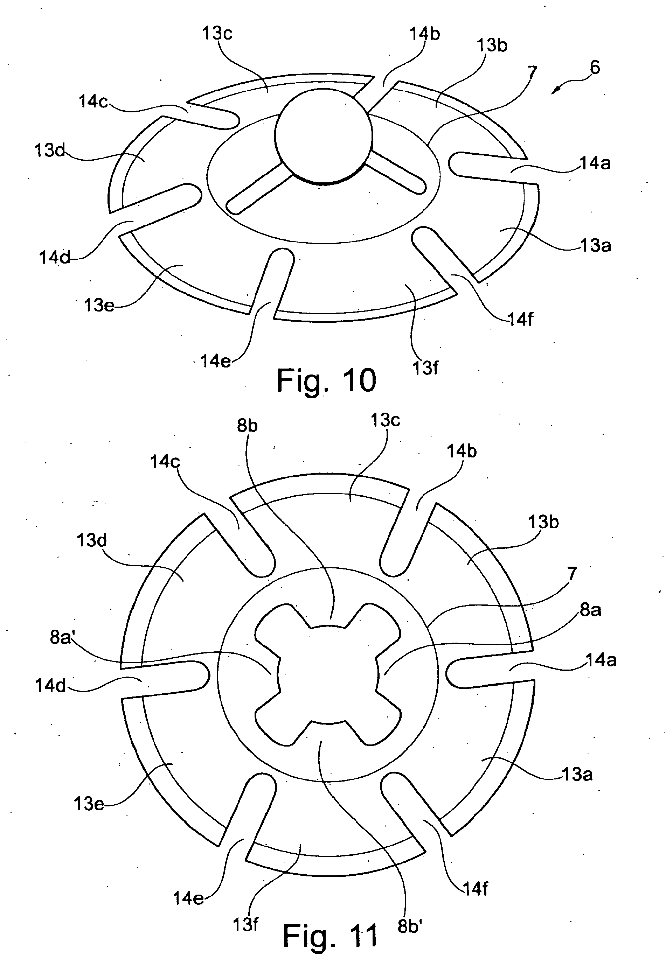

Fig. 10 zeigt ein Ausführungsbeispiel einer Befestigungskralle 6, die mehrere in Umfangsrichtung des Kreisringabschnitts 7 und von diesem radial schräg nach außen abstehende Schirmringabschnitte 13a, 13b, 13c, 13d, 13e, 13f aufweist, wobei in Umfangsrichtung aufeinander folgende Schirmringabschnitte jeweils durch einen sich im Wesentlichen in Radialrichtung erstreckenden Schirmringschlitz 14a-14f voneinander getrennt sind. Wie bereits angedeutet, kann vorgesehen sein, dass die Schirmringabschnitte 13a-13f nicht in derselben Ebene wie der Kreisringabschnitt 7 liegen, sondern schräg nach unten von diesem abstehen. Die Schirmringabschnitte und die zungenartigen Elemente bzw. die gesamte Befestigungskralle 6 weist eine gewisse Biegeelastizität auf.

Fig. 11 zeigt ein ähnliches Ausführungsbeispiel, bei dem ebenfalls vom Kreisringabschnitt 7 radial nach außen Schirmringabschnitte 13a-13f abstehen. Insgesamt sind sechs Schirmringabschnitte 13a-13f vorgesehen, wohingegen nur vier zungenartige Elemente 8a, 8b, 8a', 8b' vorgesehen sind.

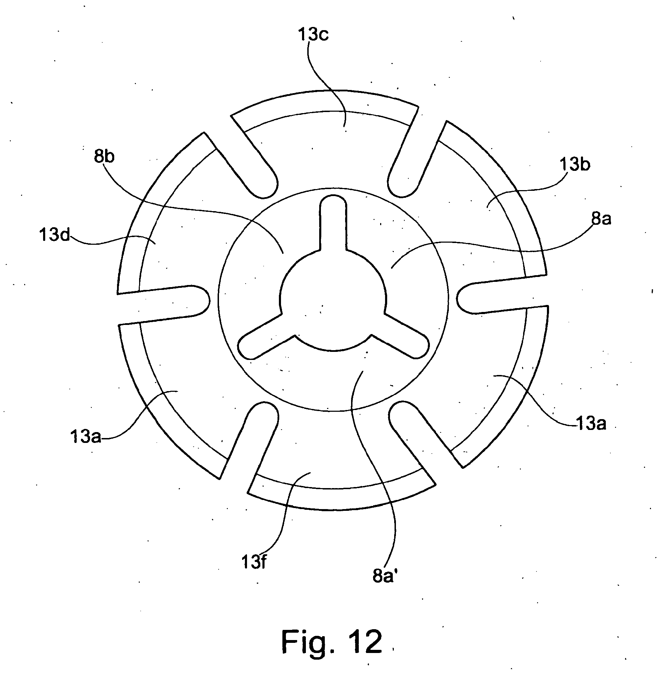

Fig. 12 zeigt ein Ausführungsbeispiel, bei dem sechs schirmringartige Elemente 13a-13f aber lediglich drei zungenartige Elemente 8a, 8b, 8a' vorgesehen sind.

Vollständigkeitshalber sei noch erwähnt, dass die freien Enden 8c, 8d (vgl. z.B. Fig. 7) einen mittleren, offenen Bereich 14 der Befestigungskralle 6 beranden bzw. definieren, indem von einer Unterseite der Befestigungskralle 6 her das z.B. in Fig. 5 gezeigte männliche Fixierelement 2 mit seiner Kugel 2a eingeführt und zwischen die freien Enden der zungenartigen Elemente 8a, 8b, 8a', 8b' einklemmbar ist.

Figur 13 zeigt eine schematische Darstellung des Grundprinzips der Erfindung. Das erste Bauteil 1, bei dem es sich beispielsweise um ein (Stahl-)Blech (z. B. ein Karosserieteil einer Fahrzeugkarosserie) handeln kann, weist eine etwas von dem ersten Bauteil 1 nach oben abstehende Erhebung 1a auf. Im Falle eines Blechbauteils kann die Erhebung 1a als Ausprägung ausgebildet sein. Die Erhebung 1a kann beispielsweise in einem Press- oder Tiefziehwerkzeug, mittels dem das Bauteil 1 umgeformt wurde, hergestellt worden sein. Die Erhebung 1a bildet eine "Verbindungsstelle" des ersten Bauteils 1, auf die das männliche Fixierelement 2, welches hier durch eine einzelne Kugel gebildet ist, aufgeschweißt ist. Das erste Bauteil 1 kann im Bereich der Erhebung 1a auch durchgestanzt sein, was den Vorteil hat, dass die Kugel bzw. das männliche Fixierelement 2 auch von unten her mit dem ersten Bauteil verschweißt werden kann.

Wie aus Figur 13 ersichtlich ist, ist ein Übergangsbereich 1b zwischen der Verbindungsstelle und dem ersten Bauteil 1 konisch sich nach unten erweiternd ausgebildet.

Analog den vorherigen Ausführungsbeispielen ist auf das erste Bauteil 1 ein zweites Bauteil 4 aufgesetzt. Das zweite Bauteil 4 weist ein Durchgangsloch 5 auf, dessen Durchmesser größer als der Durchmesser des männlichen Fixierelements 2 ist. Das männliche Fixierelement 2 ragt durch das Durchgangsloch 5 hindurch. Aufgrund der Erhebung 1a ergibt sich bei dem in Figur 13 gezeigten Ausführungsbeispiel ein "Offset" von circa 0,5mm in Bezug auf das erste Bauteil 1.

Die beiden Bauteile 1, 4 werden analog den vorherigen Ausführungsbeispielen mittels des männliche Fixierelements 2 und der darauf aufgeclipsten Befestigungskralle 6 zusammengeklemmt. Die in Fig. 13 nur schematisch dargestellte Befestigungskralle 6 weist einen im wesentlichen ebenen Kreisringabschnitt 7, der auf einer Oberseite des zweiten Bauteils 4 aufliegt, sowie biegeelastische, zungenartige Elemente 8a, 8b auf, die schräg von unten her mit ihren radial inneren Stirnseiten an dem männlichen Fixierelement anliegen und zwar in einem Bereich unterhalb der Äquatorebene 10.

Fig. 14 zeigt eine Variante des Ausführungsbeispiels der Fig. 13. Im Unterschied zur Fig. 13 weist hier die Erhebung 1a eine größere Höhe von circa 1,2mm auf, was bei Verwendung einer identischen Kugel und einer identischen Befestigungskralle 6 ein Festklemmen eines dickeren zweiten Bauteils 4 an dem ersten Bauteil 1 ermöglicht.

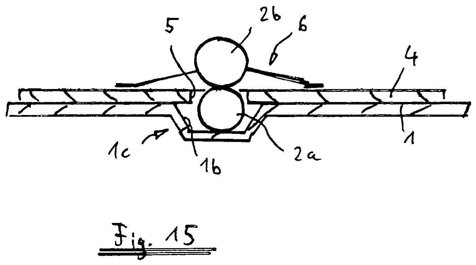

Fig. 15 zeigt ein Ausführungsbeispiel, bei dem anstatt einer Erhebung in dem ersten Bauteil 1 eine muldenartige Vertiefung bzw. Einprägung 1c vorgesehen ist. Die Verbindungsstelle ist hier also durch die Einprägung 1c gebildet. Auf die Verbindungsstelle ist eine "Doppelkugel" aufgeschweißt. Analog zum Ausführungsbeispiel der Fig. 1 weist die Doppelkugel eine untere Kugel 2a und eine damit verbundene, z. B. verschweißte, obere Kugel 2b auf. Die "Doppelkugel" durchsetzt ein in dem zweiten Bauteil 4 vorgesehenes Durchgangsloch. Das zweite Bauteil 4 wird mittels einer sich an einer Oberseite des zweiten Bauteils 4 und der oberen Kugel 2b der Doppelkugel abstützenden Befestigungskralle 6 festgeklemmt.

## Patentansprüche

1. Bauteilverbindung, mit
- einem ersten Bauteil (1),
- einem männlichen Fixierelement (2), das durch mindestens eine Kugel (2a, 2b) gebildet ist und das an einer Verbindungsstelle (1a, 1c) des ersten Bauteils (1) mit dem ersten Bauteil (1) verbunden ist und das von dem ersten Bauteil (1) absteht,
- einem Clipelement (6), welches auf das männlichen Fixierelement aufgeclipst ist, derart, dass das Clipelement (6) an der mindestens einen Kugel (2a, 2b) anliegt, wobei
• das Clipelement (6) in einem Bereich zwischen einer Oberseite des ersten Bauteils (1) und einer Äquatorebene (10) der mindestens einen Kugel (2a, 2b) schräg von unten außen her an der mindestens einen Kugel (2a, 2b) anliegt,
**dadurch gekennzeichnet, dass**
• die Verbindungsstelle (1a, 1c), an der das männliche Fixierelement (2) mit dem ersten Bauteil (1) verbunden ist, eine Erhebung (1a) des ersten Bauteils (1) oder eine Ausprägung des ersten Bauteils (1) oder eine Vertiefung (1c) des ersten Bauteils (1) oder eine Einprägung des ersten Bauteils (1) ist.

2. Bauteilverbindung nach Anspruch 1, **dadurch gekennzeichnet, dass** die mindestens eine Kugel (2a, 2b) des männlichen Fixierelements (2) unmittelbar an der Verbindungsstelle (1a, 1c) anliegt bzw. unmittelbar an der Verbindungstelle (1a, 1c) mit dem ersten Bauteil (1) verbunden ist.

3. Bauteilverbindung nach Anspruch 1 oder 2, **dadurch gekennzeichnet, dass** das männliche Fixierelement (2) aus Metall oder aus Stahl, besteht.

4. Bauteilverbindung nach einem der Ansprüche 1 bis 3, **dadurch gekennzeichnet, dass** das männliche Fixierelement (2) stoffschlüssig oder durch Verschweißen mit ersten Bauteil (1) verbunden ist.

5. Bauteilverbindung nach einem der Ansprüche 1 bis 4, **dadurch gekennzeichnet, dass**, dass männliche Fixierelement (2) zwei oder mehr als zwei miteinander verbundene Kugeln (2a, 2b) aufweist.

6. Bauteilverbindung nach einem der Ansprüche 1 bis 5, **dadurch gekennzeichnet, dass** das Clipelement (6) eine größere radiale Weite aufweist als die die Verbindungsstelle (1a, 1c) bildende Erhebung (1a) oder Vertiefung (1c).

7. Bauteilverbindung nach einem der Ansprüche 1 bis 6, **dadurch gekennzeichnet, dass** das erste Bauteil (1) ein durch Tiefziehen umgeformtes Blechbauteil ist.

8. Bauteilverbindung nach einem der Ansprüche 1 bis 7, **dadurch gekennzeichnet, dass** die Erhebung (1a) oder Vertiefung (1c) eine durch Tiefziehen oder Pressen hergestellte Erhebung oder Vertiefung ist.

9. Bauteilverbindung nach einem der Ansprüche 1 bis 8, **dadurch gekennzeichnet, dass** die Erhebung (1a) oder Vertiefung (1c) über einen konisch gestalteten Übergangsbereich (1b) mit einem sich daran anschließenden radial äußeren Bereich des ersten Bauteils (1) verbunden ist.

10. Bauteilverbindung nach einem der Ansprüche 1 bis 9, **dadurch gekennzeichnet, dass** ein zweites Bauteil (4) vorgesehen ist, welches ein Durchgangsloch (5) aufweist, wobei sich das männliche Fixierelement (2) durch das Durchgangsloch (5) hindurch erstreckt und mit einer Äquatorebene (10) seiner mindestens einen Kugel (2a, 2b) über eine dem ersten Bauteil (1) abgewandte Oberseite des zweiten Bauteils (4) vorsteht.

11. Bauteilverbindung nach einem der Ansprüche 9 oder 10, **dadurch gekennzeichnet, dass** ein radial innerer Rand des Durchgangslochs (5) an dem Übergangsbereich (1b) anliegt.

12. Bauteilverbindung nach einem der vorangehenden Ansprüche, **dadurch gekennzeichnet, dass** das Clipelement eine Befestigungskralle (6) ist, mit einem Kreisringabschnitt (7), der eine radiale Innenseite aufweist, von der mindestens zwei biegeelastische, zungenartige Elemente (8a, 8b, 8a', 8b') schräg nach innen oben in Richtung einer Oberseite der Befestigungskralle (6) abstehen, wobei die zungenartigen Elemente (8a, 8b, 8a', 8b') freie Enden (8c, 8d) aufweisen, die einen mittleren, offenen Bereich (14) der Befestigungskralle (6) definieren, in den von einer Unterseite der Befestigungskralle (6) her das Fixierelement (2) eingeführt und zwischen die freien Enden (8c, 8d) der zungenartigen Elemente (8a, 8b, 8a', 8b') eingeklemmt ist.

13. Bauteilverbindung nach Anspruch 12, **dadurch gekennzeichnet, dass** die zungenartigen Elemente (8a, 8b, 8a', 8b') durch sich von dem Kreisringabschnitt (7) im Wesentlichen radial nach innen erstreckende Schlitze (12) voneinander getrennt sind.

14. Bauteilverbindung nach Anspruch 13, **dadurch gekennzeichnet, dass** radial äußere Enden der zwischen den zungenartigen Elementen (8a, 8b, 8a', 8b') vorgesehenen Schlitze (12) ausgerundet sind.

15. Bauteilverbindung nach einem der Ansprüche 12 bis 14, **dadurch gekennzeichnet, dass** sich die zungenartigen Elemente (8a, 8b, 8a', 8b') zu ihren freien Enden (8c, 8d) hin verjüngen.

16. Bauteilverbindung nach Anspruch 15, **dadurch gekennzeichnet, dass** die freien Enden (8c, 8d) gerundet sind.

17. Bauteilverbindung nach Anspruch 15, **dadurch gekennzeichnet, dass** die freien Enden (8c, 8d) gerade ausgebildet sind und sich tangential in Bezug auf den mittleren, offenen Bereich (14) der Befestigungskralle (6) erstrecken.

18. Bauteilverbindung nach Anspruch 15, **dadurch gekennzeichnet, dass** die freien Enden (8c, 8d) konkav ausgebildet sind, so dass sie sich an das Fixierelement (2) anschmiegen können.

19. Bauteilverbindung nach einem der Ansprüche 12 bis 18, **dadurch gekennzeichnet, dass** die zungenartigen Elemente (8a, 8b, 8a', 8b') in einem Winkel (α) von einer durch den Kreisringabschnitt (7) gebildeten Ebene (11) abstehen, der in einem Bereich zwischen 10° und 40° liegt.

20. Bauteilverbindung nach Anspruch 19, **dadurch gekennzeichnet, dass** der Winkel in einem Bereich zwischen 20° und 30° liegt.

21. Bauteilverbindung nach einem der Ansprüche 19 oder 20, **dadurch gekennzeichnet, dass** der Winkel größer als 28° ist.

22. Bauteilverbindung nach einem der Ansprüche 12 bis 21, **dadurch gekennzeichnet, dass** die zungenartigen Elemente (8a, 8b, 8a', 8b') in Umfangsrichtung des Kreisringabschnitts (7) gleichmäßig verteilt angeordnet sind.

23. Bauteilverbindung nach einem der Ansprüche 12 bis 22, **dadurch gekennzeichnet, dass** die zungenartigen Elemente (8a, 8b, 8a', 8b') identisch gestaltet sind.

24. Bauteilverbindung nach einem der Ansprüche 12 bis 23, **dadurch gekennzeichnet, dass** genau zwei zungenartige Elemente (8a, 8b) vorgesehen sind.

25. Bauteilverbindung nach einem der Ansprüche 12 bis 23, **dadurch gekennzeichnet, dass** genau drei zungenartige Elemente (8a, 8b, 8a') vorgesehen sind.

26. Bauteilverbindung nach einem der Ansprüche 12 bis 23, **dadurch gekennzeichnet, dass** genau vier zungenartige Elemente (8a, 8b, 8a', 8b') vorgesehen sind.

27. Bauteilverbindung nach einem der Ansprüche 12 bis 26, **dadurch gekennzeichnet, dass** die Befestigungskralle (6) aus Metall oder aus Stahl besteht.

28. Bauteilverbindung nach einem der Ansprüche 12 bis 27, **dadurch gekennzeichnet, dass** der Kreisringabschnitt (7) eben ist.

29. Bauteilverbindung nach einem der Ansprüche 12 bis 28, **dadurch gekennzeichnet, dass** von dem Kreisringabschnitt (7) radial nach außen mehrere in Umfangsrichtung des Kreisringabschnitts (7) verteilt angeordnete Schirmringabschnitte (13a-13f) abstehen.

30. Bauteilverbindung nach Anspruch 29, **dadurch gekennzeichnet, dass** zwei in Umfangsrichtung aufeinanderfolgende Schirmringabschnitte (13a-13f) jeweils durch einen sich in Radialrichtung erstreckenden Schirmringschlitz (14a-14f) voneinander getrennt sind.

31. Bauteilverbindung nach Anspruch 30, **dadurch gekennzeichnet, dass** radial innere Enden der Schirmringschlitze (14a-14f) ausgerundet sind.

32. Bauteilverbindung nach einem der Ansprüche 30 oder 31, **dadurch gekennzeichnet, dass** die Schirmringschlitze (14a-14f) in Umfangsrichtung versetzt in Bezug auf die zwischen den zungenartigen Elementen (8a, 8b, 8a', 8b') vorgesehenen Schlitze (12) sind.

33. Bauteilverbindung nach einem der Ansprüche 29 bis 32, **dadurch gekennzeichnet, dass** die Schirmringabschnitte (13a-13f) schräg nach unten von dem Kreisringabschnitt (7) abstehen.

34. Bauteilverbindung nach einem der Ansprüche 29 bis 33, **dadurch gekennzeichnet, dass** die Anzahl der Schirmringabschnitte (13a-13f) gleich oder größer als die Anzahl der zungenartigen Elemente (8a, 8b, 8a', 8b') ist.

35. Bauteilverbindung nach einem der Ansprüche 12 bis 34, **dadurch gekennzeichnet, dass** die Befestigungskralle (6) aus einem Metallblech ausgestanzt ist, wobei die zungenartigen Elemente (8a, 8b, 8a', 8b') aufgebogen wurden.

36. Bauteilverbindung nach einem der Ansprüche 12 bis 35, **dadurch gekennzeichnet, dass** die Befestigungskralle (6) einsatzgehärtet ist.

37. Bauteilverbindung nach einem der Ansprüche 12 bis 36, **dadurch gekennzeichnet, dass** die Befestigungskralle (6) mit einem Beschichtungsmaterial überzogen ist.

38. Bauteilverbindung nach einem der Ansprüche 12 bis 37, **dadurch gekennzeichnet, dass** die Befestigungskralle (6) mit einer Korrosionsschutzbeschichtung überzogen ist.

39. Bauteilverbindung nach einem der Ansprüche 12 bis 38, **dadurch gekennzeichnet, dass** die Befestigungskralle (6) mit einer elektrisch isolierenden Beschichtung überzogen ist.

40. Bauteilverbindung nach einem der Ansprüche 12 bis 39 unter Ausschluss der Inhalte des Anspruches 35, **dadurch gekennzeichnet, dass** die Befestigungskralle (6) aus Kunststoff besteht.

41. Bauteilverbindung nach einem der Ansprüche 12 bis 40, **dadurch gekennzeichnet, dass** die Befestigungskralle (6) ein eigenständiges Element und nicht integraler Bestandteil einer anderen Komponente oder eines anderen Bauteils ist.

42. Bauteilverbindung nach einem der vorangehenden Ansprüche, **dadurch gekennzeichnet, dass** die freien Enden (8c, 8d) der zungenartigen Elemente (8a, 8b, 8a', 8b') in einem Bereich zwischen einer Oberseite (4a) des ersten Bauteils (4) und einer Äquatorebene (10) der mindestens Kugel (2a, 2b) schräg von unten außen her an der Kugel anliegen.

## Claims

1. A component connection, with
- a first component (1),
- a male fixing element (2) which is formed by at least one sphere (2a, 2b) and which is connected to the first component (1) at a connection point (1a, 1c) of the first component (1) and which projects from the first component (1),
- a clip element (6) which is clipped onto the male fixing element such that the clip element (6) lies against the at least one sphere (2a, 2b), wherein
∘ the clip element (6) in a region between an upper side of the first component (1) and an equatorial plane (10) of the at least one sphere (2a, 2b) lies externally against the at least one sphere (2a, 2b) obliquely from below,
**characterised in that**
∘ the connection point (1a, 1c) at which the male fixing element (2) is connected to the first component (1) is an elevation (1a) of the first component (1) or an outward-embossed portion of the first component (1) or an indentation (1c) of the first component (1) or an inward-embossed portion of the first component (1).

2. A component connection according to Claim 1, **characterised in that** the at least one sphere (2a, 2b) of the male fixing element (2) lies directly against the connection point (1a, 1c) or is connected to the first component (1) directly at the connection point (1a, 1c).

3. A component connection according to Claim 1 or Claim 2, **characterised in that** the male fixing element (2) comprises metal or of steel.

4. A component connection according to one of Claims 1 to 3, **characterised in that** the male fixing element (2) is connected to the first component (1) by a material-formed bond or by welding.

5. A component connection according to one of Claims 1 to 4, **characterised in that** that the male fixing element (2) has two or more than two spheres (2a, 2b) connected together.

6. A component connection according to one of Claims 1 to 5, **characterised in that** the clip element (6) has a greater radial width than the elevation (1a) or indentation (1c) which forms the connection point (1a, 1c).

7. A component connection according to one of Claims 1 to 6, **characterised in that** the first component (1) is a sheet-metal component shaped by deep drawing.

8. A component connection according to one of Claims 1 to 7, **characterised in that** the elevation (1a) or indentation (1c) is an elevation or indentation produced by deep drawing or pressing.

9. A component connection according to one of Claims 1 to 8, **characterised in that** the elevation (1a) or indentation (1c) is connected via a conically shaped transition region (1b) to a radially outer region of the first component (1) which adjoins it.

10. A component connection according to one of Claims 1 to 9, **characterised in that** a second component (4) which has a through-hole (5) is provided, the male fixing element (2) extending through the through-hole (5) and projecting with an equatorial plane (10) of its at least one sphere (2a, 2b) over an upper side of the second component (4) remote from the first component (1).

11. A component connection according to one of Claims 9 or 10, **characterised in that** a radially inner edge of the through-hole (5) lies against the transition region (1b).

12. A component connection according to one of the preceding claims, **characterised in that** the clip element is a fastening claw (6), with an annulus portion (7) which has a radial inner side, from which at least two flexurally elastic, tongue-like elements (8a, 8b, 8a', 8b') project obliquely inwards at the top in the direction of an upper side of the fastening claw (6), the tongue-like elements (8a, 8b, 8a', 8b') having free ends (8c, 8d) which define a middle, open region (14) of the fastening claw (6) into which the fixing element (2) is introduced from an underside of the fastening claw (6) and is clamped between the free ends (8c, 8d) of the tongue-like elements (8a, 8b, 8a', 8b').

13. A component connection according to Claim 12, **characterised in that** the tongue-like elements (8a, 8b, 8a', 8b') are separated from each other by slots (12) extending substantially radially inwards from the annulus portion (7).

14. A component connection according to Claim 13, **characterised in that** radially outer ends of the slots (12) provided between the tongue-like elements (8a, 8b, 8a', 8b') are curved.

15. A component connection according to one of Claims 12 to 14, **characterised in that** the tongue-like elements (8a, 8b, 8a', 8b') taper towards their free ends (8c, 8d).

16. A component connection according to Claim 15, **characterised in that** the free ends (8c, 8d) are rounded.

17. A component connection according to Claim 15, **characterised in that** the free ends (8c, 8d) are designed to be straight and extend tangentially relative to the middle, open region (14) of the fastening claw (6).

18. A component connection according to Claim 15, **characterised in that** the free ends (8c, 8d) are formed to be concave, so that they can conform to the fixing element (2).

19. A component connection according to one of Claims 12 to 18, **characterised in that** the tongue-like elements (8a, 8b, 8a', 8b') project at an angle (α) from a plane (11) formed by the annulus portion (7) which lies in a range between 10° and 40°.

20. A component connection according to Claim 19, **characterised in that** the angle lies in a range between 20° and 30°.

21. A component connection according to one of Claims 19 or 20, **characterised in that** the angle is greater than 28°.

22. A component connection according to one of Claims 12 to 21, **characterised in that** the tongue-like elements (8a, 8b, 8a', 8b') are arranged uniformly distributed in the peripheral direction of the annulus portion (7).

23. A component connection according to one of Claims 12 to 22, **characterised in that** the tongue-like elements (8a, 8b, 8a', 8b') are configured identically.

24. A component connection according to one of Claims 12 to 23, **characterised in that** precisely two tongue-like elements (8a, 8b) are provided.

25. A component connection according to one of Claims 12 to 23, **characterised in that** precisely three tongue-like elements (8a, 8b, 8a') are provided.

26. A component connection according to one of Claims 12 to 23, **characterised in that** precisely four tongue-like elements (8a, 8b, 8a', 8b') are provided.

27. A component connection according to one of Claims 12 to 26, **characterised in that** the fastening claw (6) comprises metal or of steel.

28. A component connection according to one of Claims 12 to 27, **characterised in that** the annulus portion (7) is flat.

29. A component connection according to one of Claims 12 to 28, **characterised in that** a plurality of shield ring portions (13a - 13f) arranged distributed in the peripheral direction of the annulus portion (7) project radially outwards from the annulus portion (7).

30. A component connection according to Claim 29, **characterised in that** two shield ring portions (13a - 13f) which succeed one another in the peripheral direction are separated from each other in each case by a shield ring slot (14a - 14f) extending in the radial direction.

31. A component connection according to Claim 30, **characterised in that** radially inner ends of the shield ring slots (14a - 14f) are curved.

32. A component connection according to one of Claims 30 or 31, **characterised in that** the shield ring slots (14a - 14f) in the peripheral direction are offset relative to the slots (12) provided between the tongue-like elements (8a, 8b, 8a', 8b').

33. A component connection according to one of Claims 29 to 32, **characterised in that** the shield ring portions (13a - 13f) project obliquely downwards from the annulus portion (7).

34. A component connection according to one of Claims 29 to 33, **characterised in that** the number of the shield ring portions (13a - 13f) is equal to or greater than the number of the tongue-like elements (8a, 8b, 8a', 8b').

35. A component connection according to one of Claims 12 to 34, **characterised in that** the fastening claw (6) is punched from a metal sheet, the tongue-like elements (8a, 8b, 8a', 8b') being bent upwards.

36. A component connection according to one of Claims 12 to 35, **characterised in that** the fastening claw (6) is case-hardened.

37. A component connection according to one of Claims 12 to 36, **characterised in that** the fastening claw (6) is covered with a coating material.

38. A component connection according to one of Claims 12 to 37, **characterised in that** the fastening claw (6) is covered with an anticorrosion coating.

39. A component connection according to one of Claims 12 to 38, **characterised in that** the fastening claw (6) is covered with an electrically insulating coating.

40. A component connection according to one of Claims 12 to 39 excluding the contents of Claim 35, **characterised in that** the fastening claw (6) comprises plastics material.

41. A component connection according to one of Claims 12 to 40, **characterised in that** the fastening claw (6) is a standalone element and not an integral part of another component part or another component.

42. A component connection according to one of the preceding claims, **characterised in that** the free ends (8c, 8d) of the tongue-like elements (8a, 8b, 8a', 8b') in a region between an upper side (4a) of the first component (4) and an equatorial plane (10) of the at least one sphere (2a, 2b) lie externally against the sphere obliquely from below.

## Revendications

1. Liaison de composant comprenant :
- un premier composant (1),
- un élément de fixation mâle (2) formant au moins une bille (2a, 2b) et qui est relié au point de liaison (1a, 1c) du premier composant (1) et qui est en saillie du premier composant (1),
- un élément d'enclipsage (6) qui est enclipsé sur l'élément de fixation mâle de façon que l'élément d'enclipsage (6) s'applique contre au moins une bille (2a, 2b) dans lequel
* l'élément d'enclipsage (6) s'appuyant dans une zone comprise entre le côté supérieur du premier composant (1) et le plan équatorial (10) d'au moins une bille (2a, 2b), en biais, par en dessous et de l'extérieur contre au moins une bille (2a, 2b),
**caractérisée en ce que**
* le point de liaison (1a, 1c) où l'élément de fixation mâle (2) est relié au premier composant (1) est un bossage (1a) du premier composant (1) ou une impression du premier composant (1) ou une cavité (1c) du premier composant (1) ou une impression du premier composant (1).

2. Liaison de composant selon la revendication 1,
**caractérisée en ce qu'**
au moins une bille (2a, 2b) des éléments de fixation mâle (2) s'applique directement contre le point de liaison (1a, 1c) ou indirectement contre le point de liaison (1a, 1c) avec le premier composant (1).

3. Liaison de composant selon la revendication 1 ou 2,
**caractérisée en ce que**
l'élément de fixation mâle (2) est en métal ou en acier.

4. Liaison de composant selon l'une des revendications 1 à 3,
**caractérisée en ce que**
l'élément de fixation mâle (2) est reliée au premier composant (1) par une liaison par la matière ou par soudage.

5. Liaison de composant selon l'une des revendications 1 à 4,
**caractérisée en ce que**
l'élément de fixation mâle (2) comporte deux ou plus de deux billes (2a, 2b) reliées l'une à l'autre.

6. Liaison de composant selon l'une des revendications 1 à 5,
**caractérisée en ce que**
l'élément d'enclipsage (6) a une extension radiale plus grande que le bossage (1a) ou la cavité (1c) qui forme le point de liaison (1a, 1c).

7. Liaison de composant selon l'une des revendications 1 à 6,
**caractérisée en ce que**
le premier composant (1) est une pièce en tôle formée par emboutissage profond.

8. Liaison de composant selon l'une des revendications 1 à 7,
**caractérisée en ce que**
le bossage (1a) ou la cavité (1c) sont un bossage ou une cavité réalisée par emboutissage profond ou par travail à la pression.

9. Liaison de composant selon l'une des revendications 1 à 8,
**caractérisée en ce que**
le bossage (1a) ou la cavité (1c) sont reliés par une zone de transition (1b) de forme conique avec la zone extérieure radiale adjacente du premier composant (1).

10. Liaison de composant selon l'une des revendications 1 à 9,
**caractérisée en ce qu'**
il est prévu un second composant (4) muni d'un orifice traversant (5) et l'élément de fixation mâle (2) traverse l'orifice traversant (5) et vient en saillie par son plan équatorial (10) d'au moins une de ses billes (2a, 2b) au-dessus du côté supérieur du second composant (4) à l'opposé du premier composant (1).

11. Liaison de composant selon l'une des revendications 9 ou 10,
**caractérisée en ce que**
le bord intérieur radial de l'orifice traversant (5) s'applique contre la zone transitoire (1b).

12. Liaison de composant selon l'une des revendications précédentes,
**caractérisée en ce que**
l'élément d'enclipsage est une griffe de fixation (6) ayant un segment en arc de cercle (7) avec un côté intérieur radial d'où partent au moins deux éléments en forme de languette (8a, 8b, 8a', 8b') élastiques flexibles, inclinés vers l'intérieur et vers le haut en direction du côté supérieur de la griffe de fixation (6),
les éléments (8a, 8b, 8a', 8b') en forme de languette ayant des extrémités libres (8c, 8d) qui définissent la zone médiane ouverte (14) de la griffe de fixation (6) dans laquelle on introduit l'élément de fixation (2) à partir du côté inférieure de la griffe à partir du dessous de la griffe de fixation (6) et pour se serrer entre les extrémités libres (8c, 8d) des éléments (8a, 8b, 8a', 8b') en forme de languette.

13. Liaison de composant selon la revendication 12,
**caractérisée en ce que**
les éléments en forme de languette (8a, 8b, 8a', 8b') sont séparés l'un de l'autre par le segment en anneau de cercle (7), par des fentes (12) qui s'étendent pratiquement radialement vers l'intérieur à partir du segment en anneau de cercle (7).

14. Liaison de composant selon la revendication 13,
**caractérisée en ce que**
les extrémités radiales extérieures des fentes (12) prévues entre les éléments en forme de languette (8a, 8b, 8a', 8b') sont arrondies.

15. Liaison de composant selon l'une des revendications 12 à 14,
**caractérisée en ce que**
les éléments en forme de languette (8a, 8b, 8a', 8b') vont en diminuant vers leur extrémité libre (8c, 8d).

16. Liaison de composant selon la revendication 15,
**caractérisée en ce que**
les extrémités libres (8c, 8d) sont arrondies.

17. Liaison de composant selon la revendication 15,
**caractérisée en ce que**
les extrémités libres (8c, 8d) sont droites et s'étendent tangentiellement par rapport à la zone centrale ouverte (14) de la griffe de fixation (6).

18. Liaison de composant selon la revendication 15,
**caractérisée en ce que**
les extrémités libres (8c, 8d) sont concaves de façon à épouser l'élément de fixation (2).

19. Liaison de composant selon l'une des revendications 12 à 18,
**caractérisée en ce que**
les éléments en forme de languette (8a, 8b, 8a', 8b') sont en saillie par rapport au plan (11) formé par le segment d'anneau de cercle (7) et font un angle (α) compris entre 10° et 40°.

20. Liaison de composant selon la revendication 19,
**caractérisée en ce que**
l'angle est compris entre 20° et 30°.

21. Liaison de composant selon la revendication 19 ou 20,
**caractérisée en ce que**
l'angle est supérieur à 28°.

22. Liaison de composant selon l'une des revendications 12 à 21,
**caractérisée en ce que**
les éléments en forme de languette (8a, 8b, 8a', 8b') sont répartis régulièrement dans la direction périphérique du segment d'anneau de cercle (7).

23. Liaison de composant selon l'une des revendications 12 à 22,
**caractérisée en ce que**
les éléments en forme de languette (8a, 8b, 8a', 8b') sont de forme identique.

24. Liaison de composant selon l'une des revendications 12 à 23,
**caractérisée en ce qu'**
on a exactement deux éléments en forme de languette (8a, 8b).

25. Liaison de composant selon l'une des revendications 12 à 23,
**caractérisée en ce qu'**
on a précisément trois éléments en forme de languette (8a, 8b, 8a').

26. Liaison de composant selon l'une des revendications 12 à 23,
**caractérisée en ce que**
l'on a précisément quatre éléments en forme de languette (8a, 8b, 8a', 8b').

27. Liaison de composant selon l'une des revendications 12 à 26,
**caractérisée en ce que**
la griffe de fixation (6) est en métal ou en acier.

28. Liaison de composant selon l'une des revendications 12 à 27,
**caractérisée en ce que**
le segment d'anneau de cercle (7) est plan.

29. Liaison de composant selon l'une des revendications 12 à 28,
**caractérisée en ce que**
plusieurs segments d'écran annulaire (13a-13f) répartis dans la direction périphérique du segment d'anneau de cercle (7) sont radialement vers l'extérieur par rapport au segment d'anneau de cercle (7).

30. Liaison de composant selon la revendication 29,
**caractérisée en ce que**
le segment d'écran annulaire (13a-13f) qui se suivent dans la direction périphérique sont séparés l'un de l'autre par une fente de l'anneau circulaire (14a-14f) s'étendant dans la direction radiale.

31. Liaison de composant selon la revendication 30,
**caractérisée en ce que**
les extrémités radiales intérieures des fentes de l'anneau de cercle (14a-14f) sont arrondies.

32. Liaison de composant selon l'une des revendications 30 ou 31,
**caractérisée en ce que**
les fentes d'anneau de cercle (14a-14f) sont décalées dans la direction périphérique par rapport aux fentes (12) entre les éléments en forme de languette (8a, 8b, 8a', 8b').

33. Liaison de composant selon l'une des revendications 29 à 32,
**caractérisée en ce que**
les segments d'anneau de cercle (13a-13f) sont en saillie en biais vers le bas à partir du segment d'anneau de cercle (7).

34. Liaison de composant selon l'une des revendications 29 à 33,
**caractérisée en ce que**
le nombre de segments d'anneau de cercle (13a-13f) est égal ou supérieur au nombre d'éléments en forme de languette (8a, 8b, 8a', 8b').

35. Liaison de composant selon l'une des revendications 12 à 34,
**caractérisée en ce que**
la griffe de fixation (6) est emboutie dans une tôle métallique et les éléments en forme de languette (8a, 8b et 8a', 8b') sont relevés et cintrés.

36. Liaison de composant selon l'une des revendications 12 à 35,
**caractérisée en ce que**
la griffe de fixation (6) est cémentée.

37. Liaison de composant selon l'une des revendications 12 à 36,
**caractérisée en ce que**
la griffe de fixation (6) est revêtue d'une matière de revêtement.

38. Liaison de composant selon l'une des revendications 12 à 37,
**caractérisée en ce que**
la griffe de fixation (6) est munie d'un revêtement anticorrosion.

39. Liaison de composant selon l'une des revendications 12 à 38,
**caractérisée en ce que**
la griffe de fixation (6) est revêtue d'un revêtement isolant électrique.

40. Liaison de composant selon l'une des revendications 12 à 39, à l'exclusion du contenu de la revendication 35,
**caractérisée en ce que**
la griffe de fixation (6) est en matière plastique.

41. Liaison de composant selon l'une des revendications 12 à 40,
**caractérisée en ce que**
la griffe de fixation (6) est un élément indépendant et n'est pas une pièce intégrale appartenant à un autre composant ou à une autre pièce.

42. Liaison de composant selon l'une des revendications précédentes,
**caractérisée en ce que**
les extrémités libres (8c, 8d) des éléments en forme de languette (8a, 8b, 8a', 8b') s'appliquent dans une zone comprise entre le côté supérieur (4a) du premier composant (4) et un plan équatorial (10) d'au moins une bille (2a, 2b), en biais par en-dessous de l'extérieur contre la bille.
